# EUROPÄISCHE PATENTANMELDUNG

(11) **EP 1 146 424 A2**
(43) Veröffentlichungstag der Anmeldung: **17.10.2001**
(21) Anmeldenummer: 01106110.8
(22) Anmeldetag: 13.03.2001
(51) Int. Cl.: G06F 11/26

(54) **Verfahren zum Prüfen der Funktionsfähigkeit einer Leiterplatte mit programmierten Mikrocomputer einer elektrischen Steuer- oder Regeleinrichtung**

(30) Priorität: 12.04.2000 DE 10018173
(71) Anmelder: ROBERT BOSCH GMBH, 70442 Stuttgart (DE)
(72) Erfinder: Koenig, Markus, 73033 Goeppingen (DE); Rehfuss, Herbert, 73760 Ostfildern (DE)

(57) **Zusammenfassung**

Die Erfindung betrifft ein Verfahren zum Prüfen der Funktionsfähigkeit einer Leiterplatte einer Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale abgegeben werden. Die Überprüfung der Funktionsfähigkeit der Leiterplatte mit Mikrocomputer am Einsatzort mit Hilfe eines einfachen Prüfgerätes wird dadurch erleichtert und ermöglicht, dass die Intelligenz des Mikrocomputers in den Prüfungsablauf einbezogen wird. Dadurch wird im externen Prüfgerät nur ein einfacher Schaltkreis erforderlich und an der Leiterplatte sind zusätzlich nur Anschlussmöglichkeiten für das Prüfgerät vorzusehen.

## Beschreibung

### Stand der Technik

Die Erfindung betrifft ein Verfahren zum Prüfen der Funktionsfähigkeit einer Leiterplatte einer Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale abgegeben werden.

Wird eine derartig bestückte Leiterplatte in einer Steuer- oder Regeleinrichtung eingesetzt, dann ist es wichtig, nach ihrer Herstellung einen 100 %igen Funktionstest vorzunehmen. Dazu ist ein eigenes Testsystem vorgesehen, wobei alle Eingänge durch steuerbare Spannungsquellen beaufschlagt werden und alle Ausgänge mit Messgeräten überwacht werden. Ein Prüfrechner steuert das Testsystem und überwacht die Reaktionen der Leiterplatte und stellt darüber deren Funktionsfähigkeit fest. Der erforderliche Messablauf benötigt Prüfzeiten von 1 bis 2 Minuten und aufwendige und teure Prüfeinrichtungen.

Ist die Leiterplatte am Einsatzort in Betrieb, kann das Wartungspersonal, insbesondere im Störungsfall, nicht auf einfache Weise die Funktionsfähigkeit der Leiterplatte überprüfen und die Fehlerstelle lokalisieren, es sei denn, es ist mit einem dafür geeigneten Prüfgerät ausgestattet. Die Überprüfung der Funktionsfähigkeit der Leiterplatte am Einsatzort ist daher aufwendig und teuer. Es kommt zudem immer wieder vor, dass das Wartungspersonal funktionsfähige Leiterplatten austauscht, was die Wartung zusätzlich verteuert.

Es ist Aufgabe der Erfindung, ein Verfahren der eingangs erwähnten Art zu schaffen, das das Wartungspersonal mit einem einfachen Prüfgerät am Einsatzort ohne Ausbau der Leiterplatte aus der Steuer- oder Regeleinrichtung zur Überprüfung der gesamten Funktionsfähigkeit der Leiterplatte mit dem programmierten Mikrocomputer verwenden kann.

Diese Aufgabe der Erfindung wird in gleich einfacher Weise sowohl dadurch gelöst, dass die Leiterplatte an ihren Eingängen und Ausgängen mit Anschlussmöglichkeiten für Eingangs- und Ausgangsleitungen zu einem externen Prüfgerät versehen wird, dass der Mikrocomputer der Leiterplatte über Prüfleitungen und/ oder Datenleitungen zusätzlich mit einem Schaltkreis im Prüfgerät verbunden wird, dass bei der Prüfung der Mikrocomputer über die Prüfleitungen angesteuert wird, die einer oder mehreren Funktionen zugeordnet sind, dass von dem Mikrocomputer dem Schaltkreis im Prüfgerät über die Datenleitungen mitgeteilt wird, welche der zu prüfenden Funktionen zugeordneten Eingänge über die Eingangsleitungen mit welchen Eingangs- Signalen zu beaufschlagen sind und welche Ausgangs-Signale diesen zugeordnet sind, dass die Eingangs-Signale von dem Schaltkreis des Prüfgeräts an die Eingänge angelegt werden und dass die dabei auftretenden Ausgangs-Signale des Mikrocomputers im Schaltkreis mit den zu erwartenden Ausgangs-Signalen verglichen und auf Übereinstimmung oder Nichtübereinstimmung geprüft werden, als auch dadurch, dass die Leiterplatte an ihren Eingängen und Ausgängen mit Anschlussmöglichkeiten für Eingangsund Ausgangsleitungen zu einem externen Prüfgerät versehen wird, dass der Mikrocomputer der Leiterplatte über Prüfleitungen und/oder Datenleitungen zusätzlich mit einem Schaltkreis im Prüfgerät verbunden wird, dass bei der Prüfung der Mikrocomputer über die Prüfleitungen angesteuert wird, die einer oder mehreren Funktionen zugeordnet sind, dass von dem Mikrocomputer bei der Prüfung der Mikrocomputer in Abhängigkeit des vom Prüfgerät abgegebenen Prüfsignals die zugeordneten Ausgangs-Signale über die Ausgangsleitungen an den Schaltkreis im Prüfgerät übertragen werden, dass von dem Schaltkreis diese Ausgangs-Signale in zugeordnete Eingangs-Signale umgesetzt und über die Eingangsleitungen an die Eingänge des Mikrocomputers angelegt werden, und dass vom Schaltkreis über die Ausgangsleitungen die eintreffenden Ausgangs-Signale überwacht und mit den vom Mikrocomputer mitgeteilten Ausgangs-Signalen verglichen und auf Übereinstimmung oder Nichtübereinstimmung geprüft werden.

In beiden Fällen wird mit unwesentlichem Mehraufwand an der Leiterplatte mit den Anschlussmöglichkeiten für das externe Prüfgerät die Funktionsprüfung ermöglicht, ohne die Leiterplatte aus der Steuer- oder Regeleinrichtung ausbauen zu müssen. Das externe Prüfgerät benötigt nur einen einfachen Schaltkreis, da die "Intelligenz" des Mikrocomputers bei der Prüfung in geschickter Weise mit ausgenützt wird. Die Bedienung des Prüfgerätes bleibt für das Wartungspersonal einfach und in kurzer Zeit lässt sich die volle Funktionsfähigkeit der Leiterplatte mit dem programmierten Mikrocomputer feststellen.

Im ersten Fall werden die Prüfsignale den Funktionen zugeordnet und der Mikrocomputer versieht den zusätzlichen Schaltkreis mit den Daten, die er für die Überprüfung der zugeordneten Eingangs- und Ausgangs-Signale benötigt. Die Überprüfung auf Übereinstimmung oder Nichtübereinstimmung übernimmt der zusätzliche Schaltkreis der Leiterplatte. Wie der zweite Fall zeigt, können die Prüfsignale auch den Ausgangs-Signalen zugeordnet sein. Der zusätzliche Schaltkreis steuert den Mikrocomputer mit den zugeordneten Eingangs-Signalen an und der Mikrocomputer stellt fest, ob diese mit den durch das Prüfsignal vorgegebenen Ausgangs-Signalen korrespondiert. Die Überprüfung findet also auch noch im Mikrocomputer statt und die Leiterplatte kann bei der Prüfung in der Steuer- oder Regeleinrichtung eingebaut bleiben.

Für die Durchführung der Prüfung wird eine weitere Vereinfachung und Erleichterung dadurch erreicht, dass die Prüfsignale über Prüftasten des Prüfgerätes abgegeben werden und dass das Prüfergebnis im Prüfgerät bei Übereinstimmung mittels einer grünen Leuchtdiode und bei Nichtübereinstimmung mittels einer roten Leuchtdiode angezeigt wird.

Der Anschluss des Prüfgerätes an die Leiterplatte ist nach einer vorteilhaften Weise so gelöst, dass die Eingangsleitungen, die Ausgangsleitungen, die Prüfleitungen und/oder die Datenleitungen über Steckverbindungen geführt werden.

Die Prüfung kann auf einzelne oder alle Funktionen, d.h. Kombinationen von Zuordnungen von Eingangs- und Ausgangs-Signalen, abgestimmt werden. Dazu ist nach einer weiteren Ausgestaltung vorgesehen, dass die Prüftasten einer bestimmten Funktion oder einem bestimmten Ausgangs-Signal des Mikrocomputers zugeordnet werden, oder dass eine Prüftaste allen Funktionen oder allen möglichen Ausgangs-Signalen des Mikrocomputers zugeordnet wird, und dass die Funktionen oder die Ausgangs-Signale in einem Programmablauf nacheinander überprüft werden.

Die Erfindung wird anhand eines als schematisches Blockschaltbild dargestellten Ausführungsbeispiels näher erläutert, das sowohl nach dem Verfahren des Anspruches 1 als auch nach dem Verfahren des Anspruches 2 arbeiten kann.

Beiden Verfahren ist gemeinsam, dass die Leiterplatte LP den programmierten Mikrocomputer MC trägt, welcher über Eingangs-Signale von Sensoren S1 bis Sn angesteuert wird und entsprechend der programmierten Funktionen an den Ausgängen für die angeschalteten Aktoren A1 bis Am Ausgangssignale abgibt. Dabei kann das Programm des Mikrocomputers MC die verschiedensten Zuordnungen der Eingangs-Signale zu den Ausgangs-Signalen umfassen. Es kann ein Eingangs-Signal einem oder mehreren Ausgangs-Signalen zugeordnet werden. Mehrere Eingangs-Signale können einem einzelnen oder mehreren Ausgangs-Signalen zugeordnet sein. Der Mikrocomputer MC ist nur entsprechend zu programmieren und an die Betriebsbedingungen der Steuer- oder Regeleinrichtung anzupassen. Das Verfahren ist auch nicht auf einen Wert des Eingangs- und/ oder Ausgangs-Signals begrenzt.

Die Leiterplatte LP mit dem programmierten Mikrocomputer MC ist eingangsseitig mit Sensoren S1, S2 und Sn verbunden. An den Ausgängen der Leiterplatte LP und damit des Mikrocomputers MC sind Aktoren A1, A2, Am angeschaltet. Das Programm des Mikrocomputers MC ordnet den an den Eingängen anliegenden Eingangs-Signale Ausgangs-Signale zu. Die Eingänge und die Ausgänge der Leiterplatte LP und damit des Mikrocomputers MC sind über Eingangsleitungen EL und Ausgangsleitungen AL für den Anschluss eines externen Prüfgerätes PG vorbereitet, wobei zum leichten und schnellen Anschluss die Verbindung über Steckverbindungen StV erfolgt. Zudem ist der Mikrocomputer MC über Prüfleitungen PL und/oder Datenleitungen DL mit einem im Prüfgerät PG untergebrachten Schaltkreis SK verbindbar, wobei diese Leitungen ebenfalls in die Steckverbindung StV einbezogen ist. Im Prüfgerät PG sind Prüftasten PT1, PT2 und PTx sowie eine grüne Leuchtdiode Lg und eine rote Leuchtdiode Lr als Anzeigeelemente für die Anzeige des Prüfergebnisses vorgesehen.

Ist das Prüfgerät PG an der Leiterplatte LP angeschaltet, dann kann die Prüfung beginnen, wobei der Verfahrensablauf, d.h. die Zusammenarbeit zwischen Mikrocomputer MC und Prüfgerät PG auf zwei Arten erfolgen kann. Die Gemeinsamkeit beider Arten besteht in der Einleitung der Prüfung über die Betätigung der Prüftasten. So kann mit den Prüftasten PT1 und PT2 jeweils eine einzelne Funktion des Mikrocomputers MC überprüft werden, während mit der Prüftaste PTx dem Mikrocomputer MC zu erkennen gegeben wird, dass in einem Prüfzyklus alle Funktionen nacheinander geprüft werden sollen. Ist die Prüfung in Ordnung, wird dies mit der grünen Leuchtdiode Lg angezeigt, während die rote Leuchtdiode Lr anzeigt, dass die Zuordnung der anstehenden Eingangs-Signale und der auftretenden Ausgangs-Signale nicht richtig ist, d.h. die Leiterplatte LP mit dem Mikrocomputer MC ist fehlerhaft.

Erhält der Mikrocomputer MC über die Prüftasten PT1, PT2 und PTx die zugeordneten Prüfsignale, dann wird im Verfahren nach Anspruch 1 über die Datenleitungen DL dem Schaltkreis SK mitgeteilt, welche Eingangs-Signale mit welchen Eingangswerten an die Eingangsleitungen EL anzulegen sind und welche Ausgangs-Signale auf den Ausgangsleitungen AL auftreten müssen. Im Schaltkreis SK werden die auftretenden Ausgangs-Signale der Ausgangsleitungen AL mit den vom Mikrocomputer MC mitgeteilten Ausgangs-Signalen der Datenleitungen DL verglichen und auf Übereinstimmung oder Nichtübereinstimmung geprüft. Das Prüfergebnis führt zur Anzeige über die grüne Leuchtdiode Lg oder die rote Leuchtdiode Lr.

Wird die Prüftaste PT1 betätigt, dann wiederholt sich dieser Prüfvorgang zwischen Mikrocomputer MC und Schaltkreis SK des Prüfgerätes PG für alle im Programm gespeicherten Zuordnungen von Eingangs- und Ausgangs-Signalen, wobei jeder einzelne Prüfvorgang individuell als gut oder schlecht oder nur der gesamte Prüfablauf entsprechend gekennzeichnet werden kann.

Beim Ablauf des Verfahrens nach Anspruch 2 markiert der Mikrocomputer MC entsprechend dem erhaltenen Prüfsignal die Ausgänge, so dass die zu erwartenden Ausgangs-Signale auf den Ausgangsleitungen AL vorgegeben werden. Der Schaltkreis SK ordnet diesen die entsprechende Eingangsinformation zu und legt diese auf die Eingangsleitungen EL. Der Mikrocomputer MC kann dann selbst den Vergleich und die Prüfung auf Übereinstimmung oder Nichtübereinstimmung vornehmen und das Prüfgerät PG über die Datenleitungen DL entsprechend informieren.

In beiden Fällen bleibt der Schaltkreis SK im Prüfgerät einfach, da die Intelligenz des Mikrocomputers MC bei der Prüfer der Leiterplatte LP mit einbezogen wird. Der Aufwand an der Leiterplatte LP mit den Anschlussmöglichkeiten für das Prüfgerät PG bleibt unwesentlich und das Programm des Mikrocomputers MC braucht nur noch an das zusätzliche Prüfverfahren angepasst zu werden.

Bei aufwendigeren und komplizierten Steuer- oder Regelgeräten kann die Anzeige des Prüfungsergebnisses auch durch Displays erweitert werden, die Einzelheiten der fehlerhaften Prüfung anzeigen können.

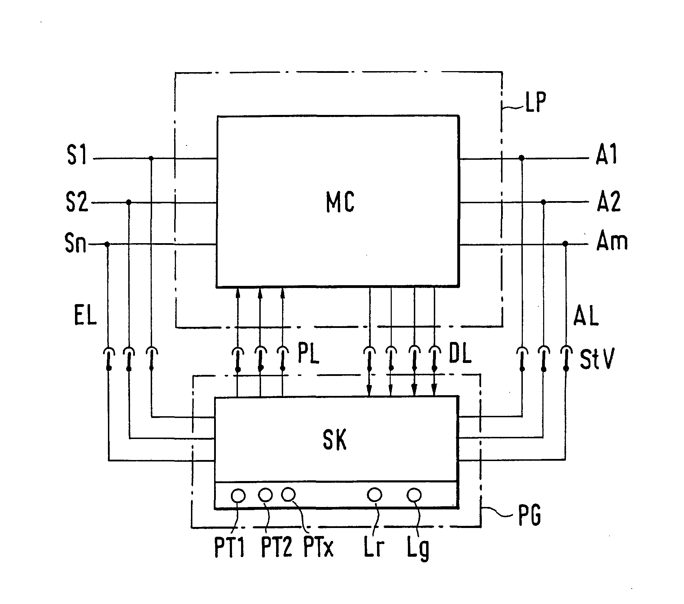

## Patentansprüche

1. Verfahren zum Prüfen der Funktionsfähigkeit einer Leiterplatte einer Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale abgegeben werden, **dadurch gekennzeichnet, dass** die Leiterplatte (LP) an ihren Eingängen und Ausgängen mit Anschlussmöglichkeiten für Eingangs- und Ausgangsleitungen (EL und AL) zu einem externen Prüfgerät (PG) versehen wird, dass der Mikrocomputer (MC) der Leiterplatte (LP) über Prüfleitungen (PL) und/oder Datenleitungen (DL) zusätzlich mit einem Schaltkreis (SK) im Prüfgerät (PG) verbunden wird, dass bei der Prüfung der Mikrocomputer (MC) über die Prüfleitungen (PL) angesteuert wird, die einer oder mehreren Funktionen zugeordnet sind, dass von dem Mikrocomputer (MC) dem Schaltkreis (SK) im Prüfgerät (PG) über die Datenleitungen (DL) mitgeteilt wird, welche der zu prüfenden Funktionen zugeordneten Eingänge über die Eingangsleitungen (EL) mit welchen Eingangs-Signalen zu beaufschlagen sind und welche Ausgangs-Signale diesen zugeordnet sind, dass die Eingangs-Signale von dem Schaltkreis (SK) des Prüfgeräts (PG) an die Eingänge angelegt werden und dass die dabei auftretenden Ausgangs-signale des Mikrocomputers (MC) im Schaltkreis (SK) mit den zu erwartenden Ausgangs-Signalen verglichen und auf Übereinstimmung oder Nichtübereinstimmung geprüft werden.

2. Verfahren zum Prüfen der Funktionsfähigkeit einer Leiterplatte einer Steuer- oder Regeleinrichtung mit einem programmierten Mikrocomputer, dessen Eingänge von Sensoren mit Eingangs-Signalen beaufschlagt werden und an dessen Ausgängen in Abhängigkeit von den anliegenden Eingangs-Signalen und der im Mikrocomputer zugeordneten Funktion Ausgangs-Signale abgegeben werden, **dadurch gekennzeichnet, dass** die Leiterplatte (LP) an ihren Eingängen und Ausgängen mit Anschlussmöglichkeiten für Eingangs- und Ausgangsleitungen (EL und AL) zu einem externen Prüfgerät (PG) versehen wird, dass der Mikrocomputer (MC) der Leiterplatte (LP) über Prüfleitungen (PL) und Datenleitungen (DL) zusätzlich mit einem Schaltkreis (SK) im Prüfgerät (PG) verbunden wird, dass bei der Prüfung der Mikrocomputer (MC) über eine oder mehreren Funktionen zugeordnete Prüfleitung (PL) vom Schaltkreis (SK) angesteuert wird, dass von dem Mikrocomputer (MC) in Abhängigkeit der vom Prüfgerät (PC) abgegebenen Prüfsignale zugeordnete Ausgangs-Signale über die Datenleitungen (DL) an den Schaltkreis (SK) im Prüfgerät (PG) zurück übertragen werden, dass von dem Schaltkreis (SK) diese Ausgangs-Signale in zugeordnete Eingangs-Signale umgesetzt und über Eingangsleitungen (EL) an die Eingänge des Mikrocomputers (MC) angelegt werden und dass vom Schaltkreis (SK) die aufgrund der Eingangs-Signale auf den Ausgangsleitungen (AL) auftretenden Ausgangs-Signale überwacht und mit den vom Mikrocomputer (MC) auf den Datenleitungen (DL) mitgeteilten Ausgangs-Signalen verglichen und auf Übereinstimmung oder Nichtübereinstimmung geprüft werden.

3. Verfahren nach Anspruch 1 oder 2, **dadurch gekennzeichnet, dass** die Prüfsignale über Prüftasten (PT1, PT2, PTx) des Prüfgerätes (PG) abgegeben werden und dass das Prüfergebnis im Prüfgerät (PG) bei Übereinstimmung mittels einer grünen Leuchtdiode (Lg) und bei Nichtübereinstimmung mittels einer roten Leuchtdiode (Lr) angezeigt wird.

4. Verfahren nach einem der Ansprüche 1 bis 3, **dadurch gekennzeichnet, dass** die Eingangsleitungen (EL), die Ausgangsleitungen (AL), die Prüfleitungen (PL) und/oder die Datenleitungen (DL) über Steckverbindungen(STV) geführt werden.

5. Verfahren nach einem der Ansprüche 1 bis 4, **dadurch gekennzeichnet, dass** die Prüftasten (PT1, PT2) einer bestimmten Funktion oder einem bestimmten Ausgangs-Signal des Mikrocomputers (MC) zugeordnet werden.

6. Verfahren nach einem der Ansprüche 1 bis 4, **dadurch gekennzeichnet, dass** eine Prüftaste (PTx) allen Funktionen oder allen möglichen Ausgangs-Signalen des Mikrocomputers (MC) zugeordnet wird, und dass die Funktionen oder die Ausgangs-Signale in einem Programmablauf nacheinander überprüft werden.
